(19) Europäisches Patentamt
European Patent Office
Office européen des brevets

(11) Veröffentlichungsnummer: **0 207 389 B1**

# (12) EUROPÄISCHE PATENTSCHRIFT

(45) Veröffentlichungstag der Patentschrift: **19.12.90**

(21) Anmeldenummer: **86108395.4**

(22) Anmeldetag: **19.06.86**

(51) Int. Cl.$^5$: **A01N 43/00**, A01N 43/10, A01N 43/16, A01N 43/18, A01N 43/36, A01N 43/40, A01N 43/80

## (54) Mittel zur Regelierung des Pflanzenwachstums.

(30) Priorität: **21.06.85 DE 3522213**

(43) Veröffentlichungstag der Anmeldung: **07.01.87 Patentblatt 87/2**

(45) Bekanntmachung des Hinweises auf die Patenterteilung: **19.12.90 Patentblatt 90/51**

(84) Benannte Vertragsstaaten: **BE CH DE FR GB IT LI NL**

(56) Entgegenhaltungen:
**EP-A- 0 123 001**
**EP-A- 0 126 713**

**CHEMICAL ABSTRACTS, Band 87, Nr. 1, 4. Juli 1977, Seite 442, Zusammenfassung Nr. 5499a, Columbus, Ohio, US.**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Keil, Michael, Dr., Fontanestrasse 4, D-6713 Freinsheim(DE)**
Erfinder: **Jahn, Dieter, Dr., Burgunder Weg 8, D-6803 Edingen-Neckarhausen(DE)**
Erfinder: **Kolassa, Dieter, Dr., Moltkestrasse 8, D-6700 Ludwigshafen(DE)**
Erfinder: **Schirmer, Ulrich, Dr., Berghalde 79, D-6900 Heidelberg(DE)**
Erfinder: **Becker, Rainer, Dr., Im Haseneck 22, D-6702 Bad Dürkheim(DE)**
Erfinder: **Jung, Johann, Prof. Dr., Hardenburgstrasse 19, D-6703 Limburgerhof(DE)**
Erfinder: **Rademacher, Wilhelm, Dr., Austrasse 1, D-6703 Limburgerhof(DE)**

EP 0 207 389 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Mittel auf der Grundlage von Cyclohexenonderivaten, die das Wachstum von Pflanzen regulieren sowie ein Verfahren zur Regulierung des Pflanzenwachstums.

Es ist bekannt, daß bestimmte 2-Acyl-3-hydroxycyclohex-2-en-1-one in das Pflanzenwachstum regulierend eingreifen (EP-A 123 001 und EP-A 126 713).

Ferner ist aus Chemical Abstracts 87: 5499a bekannt, daß 2-Acyl-3-hydroxycyclohex-2-en-1-one mit einem 2-Thienyl- oder 2-Furylrest in 5-Position insektizid oder akarizid wirksam sind.

Es wurden nun neue Mittel zur Regulierung des Pflanzenwachstums gefunden, die gekennzeichnet sind durch einen flüssigen oder festen Trägerstoff und gegebenenfalls ein oder mehrere oberflächenaktive Mittel, sowie durch einen wirksamen Gehalt an mindestens einem Cyclohexenonderivat der Formel I

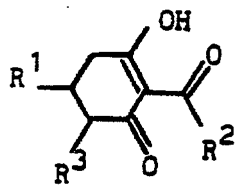 (I),

in der $R^1$ einen 5- bis 7-gliedrigen Heterocyclus mit 1 bis 3 gleichen oder verschiedenen Heteroatomen oder Ringgliedern aus der Gruppe N, O, S, SO oder $SO_2$, der gegebenenfalls bis zu 3 Substituenten aus der Gruppe Alkyl, Alkenyl, Alkoxy, Alkoxyalkyl, Alkylthio mit jeweils 1 bis 6 Kohlenstoffatomen, Cyclohexyl, Cyclohexyloxy, Phenyl, Phenoxy, wobei Phenyl und Phenoxy durch Methyl, Chlor oder Methoxy substituiert sein können, Halogen, Nitro- oder Dialkylamino enthalten kann,
$R^2$ Alkyl, Alkoxyalkyl mit jeweils 1 bis 4 Kohlenstoffatomen, Cyclopropyl, Benzyl, Phenylethyl oder Acyloxyalkyl mit bis zu 6 Kohlenstoffatomen, und
$R^3$ Wasserstoff, Alkoxycarbonyl mit 2 bis 5 Kohlenstoffatomen oder Cyano bedeuten,
oder landwirtschaftlich brauchbaren Salzen dieser Verbindungen mit der Maßgabe, daß $R^1$ nicht einen Thienyl- oder Furylrest darstellt.

In Formel I bedeutet $R^1$ beispielsweise Tetrahydropyran-2-yl, Tetrahydropyran-3-yl, 6-Methoxy-tetrahydropyran-2-yl, 6-Methoxy-tetrahydropyran-3-yl, Tetrahydropyran-4-yl, 4-Methyltetrahydropyran-3-yl, 3-Methyltetrahydropyran-4-yl, Tetrahydrothiopyran-2-yl, Tetrahydrothiopyran-3-yl, Δ 3-Dihydrothiopyran-3-yl, Tetrahydrofuran-3-yl, 1-Oxo-tetrahydrothiopyran-3-yl, 1,1-Dioxo-tetrahydrothiopyran-3-yl, Tetrahydrothien-3-yl, 2,2-Dimethyltetrahydrothien-3-yl, 2-Pyridyl, 3-Pyridyl, 2-Isopropyl-1,3-dioxepan-5-yl, Tetrahydrofuran-2-yl, Tetrahydrofuran-3-yl, 1,1-Dioxo-2,2-dimethyl-tetrahydrothien-3-yl, 2-Furyl, 2-Methylfur-5-yl, 3-Furyl, 2-Thienyl, 3-Thienyl, 1-Methylpyrrol-2-yl, 1-Methyl-pyrazol-4-yl, 3-Phenyl-isoxazol-5-yl, 4-Methylisothiazol-5-yl, 2-Methylthiazol-5-yl, 2-Dimethylaminothiazol-5-yl, 5,5-Dimethyl-1,3-dioxan-2-yl, Isothiazol-5-yl, 4-Methylisothiazol-5-yl, 2-Methoxy-pyridin-5-yl, 2,6-Dimethoxypyridin-3-yl oder 2-Methyl-pyridin-6-yl.

$R^2$ steht z.B. für Methyl, Ethyl, n-Propyl, i-Propyl, n-Butyl, sec-Butyl, i-Butyl, tert-Butyl, Cyclopropyl, Benzyl, Phenylethyl, Methoxyethyl, Acetoxymethyl oder Propionoxyethyl, und $R^3$ beispielsweise für Wasserstoff, Methoxycarbonyl, Ethoxycarbonyl oder Cyano.

Als Salze der Verbindungen der Formel I kommen landwirtschaftlich brauchbare Salze, beispielsweise Alkalimetallsalze, insbesondere Kalium- oder Natriumsalze, Erdalkalimetallsalze, insbesondere Calcium-, Magnesium- oder Bariumsalze, Mangan-, Kupfer-, Zink- oder Eisensalze sowie Ammonium-, Phosphonium-, Sulfonium- oder Sulfoxoniumsalze, beispielsweise Ammoniumsalze, Tetraalkylammoniumsalze, Benzyltrialkylammoniumsalze, Trialkylsulfoniumsalze oder Trialkylsulfoxoniumsalze in Betracht.

Aus der DE-A 2 439 104, DE-A 3 121 355, DE-A 3 123 312, DE-A 3 324 707, DE-A 3 340 265, DE-A 3 303 182, DE-A 3 342 630, EP-A 102 823, EP-A 104 876, EP-A 125 094 sowie den älteren deutschen Anmeldungen P 3 420 229.8, P 3 429 437.6 und P 3 437 238.5 ist bekannt, daß die genannte Cyclohexenonderivate der Formel I als Zwischenprodukte für die Synthese von Herbiziden dienen.

Die verschiedenen Synthesevarianten für die Cyclohexenonderivate sind der oben genannten Literatur zu entnehmen. Beispielhaft sei die Synthese von 2-Butyryl-3-hydroxy-5(3-isopropylisoxazol-5-yl)-cyclohex-2-en-1-on beschrieben.

Herstellungsbeispiel

15,1 g 5-(3-Isopropylisoxazol-5-yl)-4-methoxycarbonyl-cyclohexan-1,3-dionnatriumsalz wurden in 150 ml Tetrahydrofuran suspendiert und unter Eisbadkühlung mit 6,4 g Buttersäurechlorid versetzt. Es wurde 15 Stunden nachgerührt, anschließend abgesaugt und eingeengt. Der erhaltene Rückstand wurde in Methylenchlorid aufgenommen, mit 2 g 4-(N,N-Dimethylamino)pyridin versetzt und 3 Tage gerührt. Nach Ausschütteln mit 10 gew.%-iger Salzsäure und daran anschließend mit Wasser wurde über Natriumsulfat getrocknet und eingeengt. Man erhielt als Isomerengemisch 15 g 2-Butyryl-3-hydroxy-5(3-isopropylisox-

azol-5-yl)-4-methoxycarbonyl-cyclohex-2-en-1-on. Diese wurden mit 300 ml 10 gew.%iger Natronlauge bei 25°C über 16 Stunden gerührt, dann wurde die Lösung mit konz. Salzsäure auf pH 2 gestellt und 2 Stunden bei 85°C gerührt. Nach dem Abkühlen wurde das Produkt abgesaugt, mit Wasser ausgewaschen und aus Isopropanol umkristallisiert. Man erhielt 2-Butyryl-3-hydroxy-5(3-isopropylisoxazol-5-yl)-cyclohex-2-en-1-on vom Fp. 105–107°C (Verbindung Nr. 64).

Entsprechend können die in den folgenden Tabellen 1 bis 3 aufgeführten Verbindungen hergestellt werden.

Tabelle 1

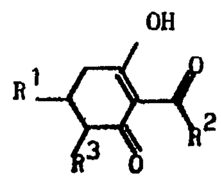

($R^3$ = H)

| Verbindung Nr. | $R^1$ | $R^2$ | Physikalische Daten + |
|---|---|---|---|
| 1 | Tetrahydrofuran-2-yl | Ethyl | |
| 2 | Tetrahydrofuran-2-yl | Propyl | |
| 3 | Tetrahydrofuran-3-yl | Ethyl | |
| 4 | Tetrahydrofuran-3-yl | Propyl | |
| 5 | 2-Methyl-tetrahydrofuran-3-yl | Ethyl | |
| 6 | 2-Methyl-tetrahydrofuran-3-yl | Propyl | 0,98(t); 1,18(d) 3,08(t) |
| 7 | 2,2-Dimethyl-tetrahydrofuran-3-yl | Ethyl | |
| 8 | 2,2-Dimethyl-tetrahydrofuran-3-yl | Propyl | |
| 9 | Tetrahydrothien-3-yl | Ethyl | 1,16(t); 1,5-3,3(m) |
| 10 | Tetrahydrothien-3-yl | Propyl | 0,99(t); 1,3-3,2(m) |
| 11 | 2,5-Dihydrothien-3-yl | Ethyl | |
| 12 | 2,5-Dihydrothien-3-yl | Propyl | |
| 13 | 2,2-Dimethyl-2,5-dihydrothien-3-yl | Ethyl | |
| 14 | 2,2-Dimethyl-2,5-dihydrothien-3-yl | Propyl | |
| 15 | 2,2-Dimethyl-1-oxo-2,5-dihydrothien-3-yl | Ethyl | |

+ Als physikalische Daten werden der Schmelzpunkt [°C] sowie 1H-NMR-Signale, δ (ppm) aufgeführt.
Dabei bedeuten: s = Singulett, d = Dublett, t = Triplett, q = Quartett, m = Multiplett

Tabelle 1 (Fortsetzung)

| Verbindung Nr. | $R^1$ | $R^2$ | Physikalische Daten |
|---|---|---|---|
| 16 | 2,2-Dimethyl-1-oxo-2,5-dihydrothien-3-yl | Propyl | |
| 17 | 2,2-Dimethyl-1,1-dioxo-2,5-dihydrothien-3-yl | Ethyl | |
| 18 | 2,2-Dimethyl-1,1-dioxo-2,5-dihydrothien-3-yl | Propyl | |
| 19 | 1-Oxo-tetrahydrothien-3-yl | Ethyl | |
| 20 | 1-Oxo-tetrahydrothien-3-yl | Propyl | |
| 21 | 1,1-Dioxo-tetrahydrothien-3-yl | Ethyl | |
| 22 | 1,1-Dioxo-tetrahydrothien-3-yl | Propyl | |
| 23 | 1-Oxo-2,2-dimethyl-tetrahydrothien-3-yl | Ethyl | |
| 24 | 1-Oxo-2,2-dimethyl-tetrahydrothien-3-yl | Propyl | |
| 25 | 1,1-Dioxo-2,2-dimethyl-tetrahydrothien-3-yl | Ethyl | |
| 26 | 1,1-Dioxo-2,2-dimethyl-tetrahydrothien-3-yl | Propyl | |
| 27 | 2-Methyl-dihydro-1,3-dithiol-2-yl | Ethyl | |
| 28 | 2-Methyl-dihydro-1,3-dithiol-2-yl | Propyl | |
| 29 | 2-Furyl | Ethyl | |
| 30 | 2-Furyl | Propyl | |
| 31 | 2-Methyl-5-furyl | Ethyl | |
| 32 | 2-Methyl-5-furyl | Propyl | |
| 33 | 2-Chlor-5-furyl | Ethyl | |
| 34 | 2-Chlor-5-furyl | Propyl | |

<u>Tabelle 1</u> (Fortsetzung)

| Verbindung Nr. | $R^1$ | $R^2$ | Physikalische Daten |
|---|---|---|---|
| 35 | 3-Furyl | Ethyl | |
| 36 | 3-Furyl | Propyl | |
| 37 | 2-Thienyl | Ethyl | |
| 38 | 2-Thienyl | Propyl | |
| 39 | 3-Thienyl | Ethyl | |
| 40 | 3-Thienyl | Propyl | 0,98(t); 3,45(m); 7,00(m); 7,32(m) |
| 41 | 2,5-Dimethyl-thien-3-yl | Ethyl | |
| 42 | 2,5-Dimethyl-thien-3-yl | Propyl | 0,98(t); 2,32(s); 2,40(s); 6,55(s) |
| 43 | 2-Nitrothien-5-yl | Ethyl | |
| 44 | 2-Nitrothien-5-yl | Propyl | |
| 45 | 1-Methyl-pyrrol-2-yl | Ethyl | |
| 46 | 1-Methyl-pyrrol-2-yl | Propyl | 0,96(t); 3,5(s); 5,85(m); 6,25(m); 6,4(m) |
| 47 | 1-Phenyl-pyrrol-3-yl | Ethyl | |
| 48 | 1-Phenyl-pyrrol-3-yl | Propyl | 0,95(t); 6,1(m) 6,8(m); 6,9(m); 7,25(s) |
| 49 | 1-Methyl-pyrrol-3-yl | Ethyl | |
| 50 | 1-Methyl-pyrrol-3-yl | Propyl | 0,97(t); 3,52(s); 5,84(t, 1H) |
| 51 | 1-Isopropyl-pyrrol-3-yl | Ethyl | |
| 52 | 1-Isopropyl-pyrrol-3-yl | Propyl | 0,95(t); 1,4(d); 4,2(m); 6,0(m); 6,55(m); 6,7(m) |
| 53 | 1-(4-Tolyl)-pyrrol-3-yl | Ethyl | |

Tabelle 1 (Fortsetzung)

| Verbindung Nr. | $R^1$ | $R^2$ | Physikalische Daten |
|---|---|---|---|
| 54 | 1-(4-Tolyl)-pyrrol-3-yl | Propyl | 0,95(t); 2,35(s); 6,2(m); 6,85(m); 7,0(m); 7,2(s) |
| 55 | 1-Methyl-pyrazol-4-yl | Ethyl | |
| 56 | 1-Methyl-pyrazol-4-yl | Propyl | 1,0(t); 3,74(s); 3,9(s); 7,3(s); 7,38(s) |
| 57 | 1-Phenyl-pyrazol-4-yl | Ethyl | |
| 58 | 1-Phenyl-pyrazol-4-yl | Propyl | |
| 59 | 3-Phenyl-isoxazol-5-yl | Ethyl | |
| 60 | 3-Phenyl-isoxazol-5-yl | Propyl | |
| 61 | 3-Methyl-isoxazol-5-yl | Ethyl | |
| 62 | 3-Methyl-isoxazol-5-yl | Propyl | |
| 63 | 3-Isopropyl-isoxazol-5-yl | Ethyl | 1,06(t); 1,14(d); 5,95(s) |
| 64 | 3-Isopropyl-isoxazol-5-yl | Propyl | 1,0(t); 1,27(d); 5,95(s) |
| 65 | 4-Methyl-isothiazol-5-yl | Ethyl | |
| 66 | 4-Methyl-isothiazol-5-yl | Propyl | |
| 67 | 3-Methoxymethyl-isoxazol-5-yl | Ethyl | |
| 68 | 3-Methoxymethyl-isoxazol-5-yl | Propyl | 43 |
| 69 | Isothiazol-4-yl | Ethyl | |
| 70 | Isothiazol-4-yl | Propyl | |
| 71 | 2-Methyl-thiazol-4-yl | Ethyl | |
| 72 | 2-Methyl-thiazol-4-yl | Propyl | |
| 73 | 2-Methyl-thiazol-5-yl | Ethyl | |

Tabelle 1 (Fortsetzung)

| Verbindung Nr. | $R^1$ | $R^2$ | Physikalische Daten |
|---|---|---|---|
| 74 | 2-Methyl-thiazol-5-yl | Propyl | |
| 75 | 2-Phenyl-thiazol-4-yl | Ethyl | |
| 76 | 2-Phenyl-thiazol-4-yl | Propyl | |
| 77 | 2-(4-Chlorphenyl)-thiazol-4-yl | Ethyl | |
| 78 | 2-(4-Chlorphenyl)-thiazol-4-yl | Propyl | |
| 79 | 2-(4-Chlorphenyl)-thiazol-5-yl | Ethyl | |
| 80 | 2-(4-Chlorphenyl)-thiazol-5-yl | Propyl | |
| 81 | 2-(4-Methoxyphenyl)-thiazol-5-yl | Ethyl | |
| 82 | 2-(4-Methoxyphenyl)-thiazol-5-yl | Propyl | |
| 83 | 2-Dimethylamino-thiazol-5-yl | Ethyl | |
| 84 | 2-Dimethylamino-thiazol-5-yl | Propyl | |
| 85 | 1-Methyl-5-Phenyl-1,2,3-thiazol-4-yl | Ethyl | |
| 86 | 1-Methyl-5-Phenyl-1,2,3-thiazol-4-yl | Propyl | |
| 87 | 4-Methyl-1,2,3-thiadiazol-5-yl | Ethyl | |
| 88 | 4-Methyl-1,2,3-thiadiazol-5-yl | Propyl | |
| 89 | 3-Phenyl-1,2,4-Oxadiazol-5-yl | Ethyl | |
| 90 | 3-Phenyl-1,2,4-Oxadiazol-5-yl | Propyl | |
| 91 | 2-Isopropyl-1,3,4-Oxadiazol-5-yl | Ethyl | |
| 92 | 2-Isopropyl-1,3,4-Oxadiazol-5-yl | Propyl | |
| 93 | Tetrahydropyran-2-yl | Ethyl | |

Tabelle 1 (Fortsetzung)

| Verbindung Nr. | $R^1$ | $R^2$ | Physikalische Daten |
|---|---|---|---|
| 94 | Tetrahydropyran-2-yl | Propyl | |
| 95 | 6-Methyl-tetrahydropyran-2-yl | Ethyl | |
| 96 | 6-Methyl-tetrahydropyran-2-yl | Propyl | |
| 97 | 6-Methoxy-tetrahydropyran-2-yl | Ethyl | |
| 98 | 6-Methoxy-tetrahydropyran-2-yl | Propyl | |
| 99 | 6-Ethoxy-tetrahydropyran-2-yl | Ethyl | |
| 100 | 6-Ethoxy-tetrahydropyran-2-yl | Propyl | |
| 101 | 4-Ethyl-6-isobutyloxy-3-methyl-tetrahydropyran-2-yl | Ethyl | |
| 102 | 4-Ethyl-6-isobutyloxy-3-methyl-tetrahydropyran-2-yl | Propyl | |
| 103 | 6-Cyclohexyloxy-tetrahydropyran-2-yl | Ethyl | |
| 104 | 6-Cyclohexyloxy-tetrahydropyran-2-yl | Propyl | |
| 105 | 6-Benzyloxy-tetrahydropyran-2-yl | Ethyl | |
| 106 | 6-Benzyloxy-tetrahydropyran-2-yl | Propyl | 0,95(t); 3,0(t); 7,3(s) |
| 107 | 6-(4-Tolyloxy)-tetrahydropyran-2-yl | Ethyl | |
| 108 | 6-(4-Tolyloxy)-tetrahydropyran-2-yl | Propyl | |
| 109 | 6-Benzyloxy-3-methyl-tetrahydropyran-2-yl | Ethyl | |
| 110 | 6-Benzyloxy-3-methyl-tetrahydropyran-2-yl | Propyl | 0,95(t); 3,0(m); 7,3(s) |
| 111 | 6-Methoxy-4-phenyl-tetrahydropyran-2-yl | Ethyl | |
| 112 | 6-Methoxy-4-phenyl-tetrahydropyran-2-yl | Propyl | 0,95(t); 3,4(s); 3,5(s); 7,3(m) |
| 113 | Tetrahydropyran-3-yl | Methyl | |

Tabelle 1 (Fortsetzung)

| Verbindung Nr. | $R^1$ | $R^2$ | Physikalische Daten |
|---|---|---|---|
| 114 | Tetrahydropyran-3-yl | Ethyl | 60-64 |
| 115 | Tetrahydropyran-3-yl | Propyl | 0,98(t); 3,02(t); 3,37(t) |
| 116 | Tetrahydropyran-3-yl | Isopropyl | |
| 117 | Tetrahydropyran-3-yl | Butyl | |
| 118 | Tetrahydropyran-3-yl | Isobutyl | |
| 119 | Tetrahydropyran-3-yl | Benzyl | |
| 120 | Tetrahydropyran-3-yl | Phenvlethyl | |
| 121 | Tetrahydropyran-3-yl | Methoxyethyl | |
| 122 | Tetrahydropyran-3-yl | Acetoxymethyl | |
| 123 | Tetrahydropyran-3-yl | Propionoxyethyl | |
| 124 | 4-Methyl-tetrahydropyran-3-yl | Ethyl | 0,95(d); 1,1(t); 3,03(q) |
| 125 | 4-Methyl-tetrahydropyran-3-yl | Propyl | |
| 126 | 4-Ethylthio-tetrahydropyran-3-yl | Ethyl | |
| 127 | 4-Ethylthio-tetrahydropyran-3-yl | Propyl | |
| 128 | 2,6-Dimethyl-tetrahydropyran-3-yl | Ethyl | |
| 129 | 2,6-Dimethyl-tetrahydropyran-3-yl | Propyl | |
| 130 | 6-Methoxy-tetrahydropyran-3-yl | Ethyl | |
| 131 | 6-Methoxy-tetrahydropyran-3-yl | Propyl | |
| 132 | 2,6,6-Trimethyl-tetrahydropyran-3-yl | Ethyl | |
| 133 | 2,6,6-Trimethyl-tetrahydropyran-3-yl | Propyl | |

Tabelle 1 (Fortsetzung)

| Verbindung Nr. | $R^1$ | $R^2$ | Physikalische Daten |
|---|---|---|---|
| 134 | 2-Methoxy-tetrahydropyran-3-yl | Ethyl | |
| 135 | 2-Methoxy-tetrahydropyran-3-yl | Propyl | |
| 136 | Tetrahydropyran-4-yl | Methyl | |
| 137 | Tetrahydropyran-4-yl | Ethyl | 1,14(t); 3,37(t); 4,02(d) |
| 138 | Tetrahydropyran-4-yl | Propyl | 0,99(t); 3,02(t); 3,92(m) |
| 139 | Tetrahydropyran-4-yl | Isopropyl | |
| 140 | Tetrahydropyran-4-yl | Butyl | |
| 141 | Tetrahydropyran-4-yl | Isobutyl | |
| 142 | Tetrahydropyran-4-yl | Benzyl | |
| 143 | Tetrahydropyran-4-yl | Phenylethyl | |
| 144 | Tetrahydropyran-4-yl | Methoxyethyl | |
| 145 | Tetrahydropyran-4-yl | Acetoxymethyl | |
| 146 | Tetrahydropyran-4-yl | Propionoxyethyl | |
| 147 | 3-Diethoxymethyl-tetrahydropyran-4-yl | Ethyl | |
| 148 | 3-Diethoxymethyl-tetrahydropyran-4-yl | Propyl | |
| 149 | 3-Methoxymethyl-tetrahydropyran-4-yl | Ethyl | |
| 150 | 3-Methoxymethyl-tetrahydropyran-4-yl | Propyl | |
| 151 | 3-Methyl-tetrahydropyran-4-yl | Ethyl | |
| 152 | 3-Methyl-tetrahydropyran-4-yl | Propyl | |
| 153 | $\Delta^2$-Dihydropyran-6-yl | Ethyl | |

Tabelle 1 (Fortsetzung)

| Verbindung Nr. | $R^1$ | $R^2$ | Physikalische Daten |
|---|---|---|---|
| 154 | $\Delta^2$-Dihydropyran-6-yl | Propyl | |
| 155 | $\Delta^3$-Dihydropyran-3-yl | Ethyl | |
| 156 | $\Delta^3$-Dihydropyran-3-yl | Propyl | |
| 157 | 2,6-Dimethyl-$\Delta^3$-dihydropyran-3-yl | Ethyl | |
| 158 | 2,6-Dimethyl-$\Delta^3$-dihydropyran-3-yl | Propyl | |
| 159 | 3,6-Dimethyl-$\Delta^2$-dihydropyran-6-yl | Ethyl | |
| 160 | 3,6-Dimethyl-$\Delta^2$-dihydropyran-6-yl | Propyl | |
| 161 | $\Delta^2$-Dihydropyran-3-yl | Ethyl | |
| 162 | $\Delta^2$-Dihydropyran-3-yl | Propyl | |
| 163 | Tetrahydrothiopyran-3-yl | Methyl | |
| 164 | Tetrahydrothiopyran-3-yl | Ethyl | 1,14(t); 1,6-2,8(m); 3,06(q) |
| 165 | Tetrahydrothiopyran-3-yl | Propyl | 70-72 |
| 166 | Tetrahydrothiopyran-3-yl | Isopropyl | |
| 167 | Tetrahydrothiopyran-3-yl | Butyl | |
| 168 | Tetrahydrothiopyran-3-yl | Isobutyl | |
| 169 | Tetrahydrothiopyran-3-yl | Benzyl | |
| 170 | Tetrahydrothiopyran-3-yl | Phenylethyl | |
| 171 | Tetrahydrothiopyran-3-yl | Methoxyethyl | 3,55(s); 4,7(s); 17,4(s) |
| 172 | Tetrahydrothiopyran-3-yl | Acetoxymethyl | |
| 173 | Tetrahydrothiopyran-3-yl | Propionoxyethyl | |

Tabelle 1 (Fortsetzung)

| Verbindung Nr. | $R^1$ | $R^2$ | Physikalische Daten |
|---|---|---|---|
| 174 | 1-Oxo-tetrahydrothiopyran-3-yl | Ethyl | |
| 175 | 1-Oxo-tetrahydrothiopyran-3-yl | Propyl | 0,99(t); 2,97(t); 3,39(m) |
| 176 | 1,1-Dioxo-tetrahydrothiopyran-3-yl | Ethyl | |
| 177 | 1,1-Dioxo-tetrahydrothiopyran-3-yl | Propyl | 0,98(t); 1,66(m); 2,98(t) |
| 178 | 2,6-Dimethyl-tetrahydrothiopyran-3-yl | Ethyl | |
| 179 | 2,6-Dimethyl-tetrahydrothiopyran-3-yl | Propyl | |
| 180 | 2,6-Dimethyl-1-oxo-tetrahydrothiopyran-3-yl | Ethyl | |
| 181 | 2,6-Dimethyl-1-oxo-tetrahydrothiopyran-3-yl | Propyl | |
| 182 | 2,6-Dimethyl-1,1-dioxo-tetrahydrothiopyran-3-yl | Ethyl | |
| 183 | 2,6-Dimethyl-1,1-dioxo-tetrahydrothiopyran-3-yl | Propyl | |
| 184 | 4-Ethylthio-tetrahydrothiopyran-3-yl | Ethyl | |
| 185 | 4-Ethylthio-tetrahydrothiopyran-3-yl | Propyl | |
| 186 | Tetrahydrothiopyran-4-yl | Ethyl | |
| 187 | Tetrahydrothiopyran-4-yl | Propyl | |
| 188 | $\Delta^3$-Dihydrothiopyran-3-yl | Ethyl | |
| 189 | $\Delta^3$-Dihydrothiopyran-3-yl | Propyl | 1,01(t); 1,66(m); 5,78(s) |
| 190 | 2,6-Dimethyl-$\Delta^3$-dihydrothiopyran-3-yl | Ethyl | |
| 191 | 2,6-Dimethyl-$\Delta^3$-dihydrothiopyran-3-yl | Propyl | |
| 192 | 1-Oxo-$\Delta^3$-dihydrothiopyran-3-yl | Ethyl | |
| 193 | 1-Oxo-$\Delta^3$-dihydrothiopyran-3-yl | Propyl | |

Tabelle 1 (Fortsetzung)

| Verbindung Nr. | $R^1$ | $R^2$ | Physikalische Daten |
|---|---|---|---|
| 194 | 1,1-Dioxo-$\Delta^3$-dihydrothiopyran-3-yl | Ethyl | |
| 195 | 1,1-Dioxo-$\Delta^3$-dihydrothiopyran-3-yl | Propyl | |
| 196 | $\Delta^3$-Dihydrothiopyran-4-yl | Ethyl | |
| 197 | $\Delta^3$-Dihydrothiopyran-4-yl | Cyclopropyl | |
| 198 | $\Delta^3$-Dihydrothiopyran-4-yl | Propyl | |
| 199 | 5,5-Dimethyl-1,3-dioxan-2-yl | Ethyl | |
| 200 | 5,5-Dimethyl-1,3-dioxan-2-yl | Propyl | 67-69 |
| 201 | 2-Methyl-1,3-dithian-2-yl | Ethyl | |
| 202 | 2-Methyl-1,3-dithian-2-yl | Propyl | |
| 203 | 1,4-Dioxan-2-yl | Ethyl | |
| 204 | 1,4-Dioxan-2-yl | Propyl | 0,95(t); 1,65(m); 3,0(t) |
| 205 | 1,4-Dithian-2-yl | Ethyl | |
| 206 | 1,4-Dithian-2-yl | Propyl | 0,99(t); 1,3-1,9(m); 2,1-3,3(m) |
| 207 | 1,3-Dithian-5-yl | Ethyl | |
| 208 | 1,3-Dithian-5-yl | Propyl | |
| 209 | 2-Pyridyl | Ethyl | |
| 210 | 2-Pyridyl | Propyl | 0,99(t); 3,50(m); 7,21(m); 7,65(t); 8,56(s) |
| 211 | 2-Methyl-pyridin-6-yl | Ethyl | 113-15 |

Tabelle 1 (Fortsetzung)

| Verbindung Nr. | $R^1$ | $R^2$ | Physikalische Daten |
|---|---|---|---|
| 212 | 2-Methyl-pyridin-6-yl | Propyl | 88-92 |
| 213 | 3-Pyridyl | Ethyl | |
| 214 | 3-Pyridyl | Propyl | 0,97(t); 7,47(m); 8,56(m) |
| 215 | 2-Phenoxy-pyridin-5-yl | Ethyl | |
| 216 | 2-Phenoxy-pyridin-5-yl | Propyl | |
| 217 | 2,6-Dichlor-pyridin-3-yl | Ethyl | |
| 218 | 2,6-Dichlor-pyridin-3-yl | Propyl | |
| 219 | 2,4,6-Trimethoxypyridin-3-yl | Ethyl | |
| 220 | 2,4,6-Trimethoxypyridin-3-yl | Propyl | |
| 221 | 2,6-Dimethoxypyridin-3-yl | Ethyl | |
| 222 | 2,6-Dimethoxypyridin-3-yl | Propyl | |
| 223 | 3-Chlor-2,6-dimethoxy-pyridin-5-yl | Ethyl | |
| 224 | 3-Chlor-2,6-dimethoxy-pyridin-5-yl | Propyl | |
| 225 | Pyridazin-3-yl | Ethyl | |
| 226 | Pyridazin-3-yl | Propyl | |
| 227 | Pyrimidin-5-yl | Ethyl | |
| 228 | Pyrimidin-5-yl | Propyl | |
| 229 | 4,6-Dimethoxy-pyrimidin-5-yl | Ethyl | |
| 230 | 4,6-Dimethoxy-pyrimidin-5-yl | Propyl | |
| 231 | 2-Methoxypyrimidin-5-yl | Ethyl | |

Tabelle 1 (Fortsetzung)

| Verbindung Nr. | $R^1$ | $R^2$ | Physikalische Daten |
|---|---|---|---|
| 232 | 2-Methoxypyrimidin-5-yl | Propyl | |
| 233 | Pyrazin-2-yl | Ethyl | |
| 234 | Pyrazin-2-yl | Propyl | |
| 235 | 1,3-Dioxepan-5-yl | Ethyl | |
| 236 | 1,3-Dioxepan-5-yl | Propyl | |
| 237 | 1-(1-Isobutoxy-eth-1-yl)-1,3-dioxepan-5-yl | Ethyl | |
| 238 | 1-(1-Isobutoxy-eth-1-yl)-1,3-dioxepan-5-yl | Propyl | |
| 239 | 2-Methyl-1,3-dioxepan-5-yl | Ethyl | |
| 240 | 2-Methyl-1,3-dioxepan-5-yl | Propyl | |
| 241 | 2-Isopropyl-1,3-dioxepan-5-yl | Ethyl | |
| 242 | 2-Isopropyl-1,3-dioxepan-5-yl | Propyl | |
| 243 | 2-tert-Butyl-1,3-dioxepan-5-yl | Ethyl | |
| 244 | 2-tert-Butyl-1,3-dioxepan-5-yl | Propyl | |
| 268 | Tetrahydrothiopyran-3-yl | Cyclopropyl | 112-113 |
| 269 | Tetrahydropyran-3-yl | Cyclopropyl | |
| 270 | Tetrahydropyran-4-yl | Cyclopropyl | |
| 271 | 3-Isopropylisoxazol-5-yl | Cyclopropyl | |

Tabelle 2

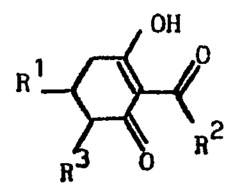

| Verbindung Nr. | $R^1$ | $R^2$ | $R^3$ | Physikalische Daten |
|---|---|---|---|---|
| 245 | Tetrahydrothiopyran-3-yl | $n-C_3H_7$ | CN | |
| 246 | Tetrahydrothiopyran-3-yl | $n-C_3H_7$ | $COOCH_3$ | |
| 247 | Tetrahydropyran-3-yl | $n-C_3H_7$ | $COOCH_3$ | |
| 248 | Tetrahydropyran-4-yl | $CH_3$ | $COOCH_3$ | |
| 249 | Tetrahydropyran-4-yl | $C_2H_5$ | $COOCH_3$ | |
| 250 | Tetrahydropyran-4-yl | $n-C_3H_7$ | $COOCH_3$ | |
| 251 | Tetrahydropyran-4-yl | $n-C_4H_9$ | $COOCH_3$ | |
| 252 | Tetrahydropyran-4-yl | $C_2H_5$ | CN | |
| 253 | 6-Methoxy-tetrahydropyran-2-yl | $n-C_3H_7$ | $COOCH_3$ | |
| 254 | 4-Methyl-tetrahydropyran-3-yl | $n-C_3H_7$ | $COOCH_3$ | |
| 255 | 3-Pyridyl | $n-C_3H_7$ | $COOCH_3$ | |
| 256 | 2-Isopropyl-1,3-dioxepan-5-yl | $C_2H_5$ | $COOCH_3$ | |
| 257 | 2-Isopropyl-1,3-dioxepan-5-yl | $n-C_3H_7$ | $COOCH_3$ | |
| 258 | 2-Methyl-tetrahydrofuran-3-yl | $n-C_3H_7$ | $COOCH_3$ | 0,97(t); 1,22(d); 3,84(s) |

**Tabelle 3**

**Salze der Formel II**

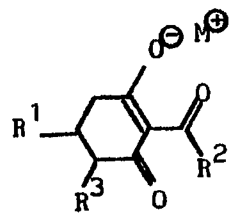

(II)

in der $R^1$ = Tetrahydrothiopyran-3-yl, $R^2$ = n-Propyl und $R^3$ = H bedeuten

| Verbindung Nr. | M | Physikalische Daten |
|---|---|---|
| 259 | Natrium | |
| 260 | Kalium | |
| 261 | Barium | |
| 262 | Kupfer (II) | |
| 263 | Triethylammonium | |
| 264 | Tri-n-butylammonium | |
| 265 | Benzyltrimethylammonium | |
| 266 | Trimethylsulfonium | |
| 267 | Trimethylsulfoxonium | |

Die Cyclohexanonderivate der Formel I können praktisch alle Entwicklungsstadien einer Pflanze verschiedenartig beeinflussen und werden deshalb als Wachstumsregulatoren eingesetzt.

Die erfindungsgemäß zu verwendenden Wirkstoffe können den Kulturpflanzen sowohl vom Samen her (als Saatgutbeizmittel) als auch über den Boden, d.h. durch die Wurzel sowie – besonders bevorzugt – durch Spritzung über das Blatt zugeführt werden.

Infolge der hohen Pflanzenverträglichkeit kann die Aufwandmenge stark variiert werden.

Bei der Saatgutbehandlung werden im allgemeinen Wirkstoffmengen von 0,001 bis 50 g je Kilogramm Saatgut, vorzugsweise 0,01 bis 10 g, benötigt.

Für die Blatt- und Bodenbehandlung sind im allgemeinen Gaben von 0,01 bis 12 kg/ha bevorzugt 0,25 bis 3 kg/ha als ausreichend zu betrachten.

Die Formulierungen bzw. die daraus hergestellten gebrauchsfertigen Zubereitungen wie Lösungen, Emulsionen, Suspensionen, Pulver, Stäbe, Pasten oder Granulate werden in bekannter Weise angewendet, beispielsweise im Vorlaufaufverfahren, im Nachauflaufverfahren oder als Beizmittel.

Beispiele für Formulierungen sind:

I 20 Gewichtsteile der Verbindung des Beispiels 64 werden in 3 Gewichtsteilen des Natriumsalzes der Diisobutylnaphthalin-sulfonsäure, 17 Gewichtsteilen des Natriumsalzes einer Ligninsulfonsäure aus einer Sulfitablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gew.-% des Wirkstoffs enthält.

II 3 Gewichtsteile der Verbindung des Beispiels 64 werden mit 97 Gewichtsteilen feinteiligem Kaolin innig vermischt. Man erhält auf diese Weise ein Stäubemittel, das 3 Gew.-% des Wirkstoffs enthält.

III 30 Gewichtsteile der Verbindung des Beispiels 115 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

IV 40 Gewichtsteile der Verbindung des Beispiels 137 werden mit 10 Teilen Natriumsalz eines Phenolsulfonsäure-harnstoff-formaldehyd-Kondensats, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gew.-% Wirkstoff enthält.

V 20 Teile der Verbindung des Beispiels 164 werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

VI Man vermischt 90 Gewichtsteile der Verbindung des Beispiels 214 mit 10 Gewichtsteilen N-Methylalpha-pyrrolidon und erhält eine Lösung, die zur Anwendung in Form kleinster Tropfen geeignet ist.

VII 20 Gewichtsteile der Verbindung des Beispiels 138 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.-% des Wirkstoffs enthält.

VIII 20 Gewichtsteile der Verbindungi des Beispiels 165 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.-% des Wirkstoffs enthält.

IX 20 Gewichtsteile der Verbindung des Beispiels 137 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsanteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.-% des Wirkstoffs enthält.

Die erfindungsgemäßen Mittel können in diesen Aufwendungsformen auch zusammen mit anderen Wirkstoffen vorliegen, wie z.B. Herbiziden, Insektiziden, Wachstumsregulatoren und Fungiziden oder auch mit Düngemitteln vermischt und ausgebracht werden. Beim Vermischen mit Wachstumsregulatormischungen treten auch synergistische Effekte auf, d.h. die Wirksamkeit des Kombinationsproduktes ist größer als die addierten Wirksamkeiten der Einzelkomponenten.

Zur Bestimmung der wachstumsregulierenden Eigenschaft von Prüfsubstanzen wurden Testpflanzen auf ausreichend mit Nährstoffen versorgtem Kultursubstrat in Kunststoffgefäßen von ca. 12,5 cm Durchmesser angezogen.

Die Versuche zeigen, daß beispielsweise die Verbindungen Nr. 64, 115, 137, 164 und 214 bei Nachauflaufanwendung in Form einer wäßrigen Aufbereitung deutlich wachstumsregulierende Eigenschaften besitzen.

In zwei speziellen Versuchsreihen, bei denen jedesmal mit dem bekannten Handelsprodukt 2-Chlorethyltrimethylammoniumchlorid (common name: Chlormequatchlorid) verglichen wurde, hatten bei Sommergerste die Verbindungen 40, 50, 52, 54 und 124 und bei Reis die Verbindungen 50, 52 und 54 einen besonderen Einfluß auf die Länge der Halme bzw. Internodien schon bei Außenwandmengen von 1,5 bis 6 mg je Gefäß.

Die beispielhaft ausgewählten Verbindungen Nr. 64, 137, 138, 164 und 165, die zusammen mit einer Nährlösung angewendet wurden, zeigen ebenfalls deutlich wachstumsregulierende Eigenschaften.

## Patentansprüche

1. Mittel zur Regulierung des Pflanzenwachstums, gekennzeichnet durch einen flüssigen oder festen Trägerstoff und gegebenenfalls ein oder mehrere oberflächenaktive Mittel, sowie einen wirksamen Gehalt an mindestens einem Cyclohexenonderivat der Formel I

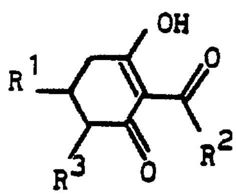 (I),

in der $R^1$ einen 5- bis 7-gliedrigen Heterocyclus mit 1 bis 3 gleichen oder verschiedenen Heteroatomen oder Ringgliedern aus der Gruppe N, O, S, SO oder $SO_2$, der gegebenenfalls bis zu 3 Substituenten aus der Gruppe Alkyl, Alkenyl, Alkoxy, Alkoxyalkyl, Alkylthio mit jeweils 1 bis 6 Kohlenstoffatomen, Cyclohexyl, Cyclohexyloxy, Phenyl, Phenoxy, wobei Phenyl und Phenoxy durch Methyl, Chlor oder Methoxy substituiert sein können, Halogen, Nitro oder Dialkylamino enthalten kann,
$R^2$ Alkyl, Alkoxyalkyl mit jeweils 1 bis 4 Kohlenstoffatomen, Cyclopropyl, Benzyl, Phenylethyl oder Acyloxyalkyl mit bis zu 6 Kohlenstoffatomen, und
$R^3$ Wasserstoff, Alkoxycarbonyl mit 2 bis 5 Kohlenstoffatomen oder Cyano bedeuten,
oder landwirtschaftlich brauchbaren Salzen dieser Verbindungen, mit der Maßgabe, daß $R^1$ nicht einen Thienyl oder Furylrest darstellt.

2. Mittel zur Regulierung des Pflanzenwachstums gemäß Anspruch 1, enthaltend ein Cyclohexenonderivat der Formel I, in der $R^1$ einen 2-Dimethylamino-thiazol-5-ylrest bedeutet.

3. Mittel zur Regulierung des Pflanzenwachstums gemäß den Ansprüchen 1 und 2, gekennzeichnet durch einen Wirkstoffgehalt an I von 0,001 bis 50 g je kg Saatgut im Fall einer Saatgutbehandlung oder einen Wirkstoffgehalt von I von 0,01 bis 12 kg/ha im Fall einer Blatt- oder Bodenbehandlung.

4. Verwendung eines Cyclohexenonderivats der Formel I

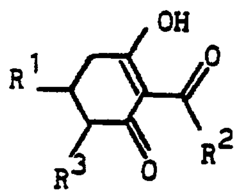 (I),

in der $R^1$ einen 5- bis 7-gliedrigen Heterocyclus mit 1 bis 3 gleichen oder verschiedenen Heteroatomen oder Ringgliedern aus der Gruppe N, O, S, SO oder $SO_2$, der gegebenenfalls bis zu 3 Substituenten aus der Gruppe Alkyl, Alkenyl, Alkoxy, Alkoxyalkyl, Alkylthio mit jeweils 1 bis 6 Kohlenstoffatomen, Cyclohexyl, Cyclohexyloxy, Phenyl, Phenoxy, wobei Phenyl und Phenoxy durch Methyl, Chlor oder Methoxy substituiert sein können, Halogen, Nitro oder Dialkylamino enthalten kann,
$R^2$ Alkyl, Alkoxyalkyl mit jeweils 1 bis 4 Kohlenstoffatomen, Cyclopropyl, Benzyl, Phenylethyl oder Acyloxyalkyl mit bis zu 6 Kohlenstoffatomen, und
$R^3$ Wasserstoff, Alkoxycarbonyl mit 2 bis 5 Kohlenstoffatomen oder Cyano bedeuten,
oder landwirtschaftlich brauchbaren Salzen dieser Verbindungen zur Regulierung des Pflanzenwachstums.

5. Verwendung eines Cyclohexenonderivats der Formel I gemäß Anspruch 4, in der $R^1$ 3-Isopropylisoxazol-5-yl oder 2-Dimethylaminothiazol-5-yl bedeutet, zur Regulierung des Pflanzenwachstums.

6. Verwendung eines Cyclohexenonderivats der Formel I gemäß Anspruch 4, in der $R^1$ 2-Dimethylamino-thiazol-5-yl, $R^2$ Propyl und $R^3$ Wasserstoff bedeuten, zur Regulierung des Pflanzenwachstums.

7. Verfahren zur Regulierung des Pflanzenwachstums, dadurch gekennzeichnet, daß man mindestens ein Cyclohexenonderivat der Formel I gemäß Anspruch 4 auf Pflanzen oder deren Lebensraum einwirken läßt.

8. Verfahren zur Regulierung des Pflanzenwachstums, enthaltend ein Cyclohexenonderivat der Formel I gemäß Anspruch 4, in der $R^1$ 2-Dimethylamino-thiazol-5-yl bedeutet.

9. Verfahren zur Regulierung des Pflanzenwachstums gemäß den Ansprüchen 7 und 8, dadurch gekennzeichnet, daß man ein Cyclohexenonderivat der Formel I gemäß Anspruch 4 in einer Menge von 0,001 bis 50 g je kg Saatgut im Fall einer Saatgutbehandlung oder in einer Menge von 0,01 bis 12 kg/ha im Fall einer Blatt- oder Bodenbehandlung verwendet.

## Claims

1. A plant growth regulating agent, comprising a liquid or solid carrier and, if required, one or more surfactants, and an effective content of at least one cyclohexenone derivative of the formula I

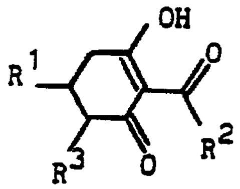

(I)

where $R^1$ is a 5- to 7-membered heterocycle which has 1 to 3 identical or different heteroatoms or ring members from the group consisting of N, O, S, SO and $SO_2$ and which may contain up to 3 substituents from the group consisting of alkyl, alkenyl, alkoxy, alkoxyalkyl and alkylthio, each of 1 to 6 carbon atoms, cyclohexyl, cyclohexyloxy, phenyl which may be substituted by methyl, chloro or methoxy, phenoxy which may be substituted by methyl, chloro or methoxy, halogen, nitro or dialkylamino,
$R^2$ is alkyl or alkoxyalkyl, each of 1 to 4 carbon atoms, cyclopropyl, benzyl, phenylethyl or acyloxyalkyl of up to 6 carbon atoms, and
$R^3$ is hydrogen, alkoxycarbonyl of 2 to 5 carbon atoms or cyano,
or agriculturally usable salts of these compounds, with the proviso that $R^1$ is not thienyl or furyl.

2. A plant growth regulating agent as claimed in claim 1, containing a cyclohexenone derivative of the formula I where $R^1$ is 2-dimethylaminothiazol-5-yl.

3. A plant growth regulating agent as claimed in claims 1 and 2, which contains from 0.001 to 50 g of active ingredient I per kg of seed in the case of seed treatment or from 0.01 to 12 kg/ha of active ingredient I in the case of foliage or soil treatment.

4. Use of a cyclohexenone derivative of the formula I

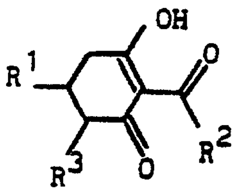

(I)

where $R^1$ is a 5- to 7-membered heterocycle which has 1 to 3 identical or different heteroatoms or ring members from the group consisting of N, O, S, SO and $SO_2$ and which may contain up to 3 substituents from the group consisting of alkyl, alkenyl, alkoxy, alkoxyalkyl and alkylthio, each of 1 to 6 carbon atoms, cyclohexyl, cyclohexyloxy, phenyl which may be substituted by methyl, chloro or methoxy, phenoxy which may be substituted by methyl, chloro or methoxy, halogen, nitro or dialkylamino,
$R^2$ is alkyl or alkoxyalkyl, each of 1 to 4 carbon atoms, cyclopropyl, benzyl, phenylethyl or acyloxyalkyl of up to 6 carbon atoms, and
$R^3$ is hydrogen, alkoxycarbonyl of 2 to 5 carbon atoms or cyano,
or agriculturally usable salts of these compounds for regulating plant growth.

5. Use of a cyclohexenone derivative of the formula I as claimed in claim 4 where $R^1$ is 3-isopropylisoxazol-5-yl or 2-dimethylaminothiazol-5-yl, for regulating plant growth.

6. Use of a cyclohexenone derivative of the formula I as claimed in claim 4 where $R^1$ is 2-dimethylaminothiazol-5-yl, $R^2$ is propyl and $R^3$ is hydrogen, for regulating plant growth.

7. A method for regulating plant growth, wherein at least one cyclohexenone derivative of the formula I as claimed in claim 4 is allowed to act on plants or their habitat.

8. A method for regulating plant growth, wherein a cyclohexenone derivative of the formula I as claimed in claim 4 where $R^1$ is 2-dimethylaminothiazol-5-yl is used.

9. A method for regulating plant growth as claimed in claims 7 and 8, wherein a cyclohexenone derivative of the formula I as claimed in claim 4 is used in an amount of from 0.001 to 50 g per kg of seed in the case of seed treatment or in an amount of from 0.01 to 12 kg/ha in the case of foliage or soil treatment.

## Revendications

1. Moyen de régulation de la croissance des plantes, caractérisé par un support liquide ou solide et éventuellement un ou plusieurs agents tensioactifs, ainsi qu'une quantité efficace d'au moins un dérivé de cyclohexenone de la formule I

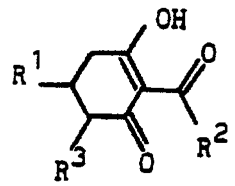 (I)

dans laquelle
$R^1$ représente un hétérocycle de 5 à 7 chaînons avec 1 à 3 hétéroatomes identiques ou différents ou chaînons de noyau du groupe N, O, S, SO ou $SO_2$, qui peut contenir éventuellement jusqu'à 3 substituants du groupe alkyle, alcényle, alcoxy, alcoxyalkyle, alkylthio ayant chacun 1 à 6 atomes de carbone, cyclohexyle, cyclohexyloxy, halogène, nitro dialkylamino, phényle ou phénoxy, phényle et phénoxy pouvant être substitués par méthyle, chlore ou méthoxy,
$R^2$ représente alkyle, alcoxyalkyle ayant chacun 1 à 4 atomes de carbone, cyclopropyle, benzyle, phényléthyle ou acyloxyalkyle ayant jusqu'à 6 atomes de carbone, et
$R^3$ représente hydrogène, alcoxycarbonyle à 2 à 5 atomes de carbone ou cyano
ou des sels de ces composés utilisables en agriculture à condition que $R^1$ ne représente pas un reste thiényle ou furyle.

2. Moyen de régulation de la croissance des plantes, selon la revendication 1, contenant un dérivé de cyclohexenone de formule I, dans lequel
$R^1$ représente un reste 2-diméthylamino-thiazol-5-yle.

3. Moyen de régulation de la croissance des plantes, selon la revendication 1 ou 2, caractérisé par une teneur en principe actif de I de 0,001 à 50 g par kg de semences, dans le cas d'un traitement des semences ou une teneur en principe actif de I de 0,01 à 12 kg/ha dans le cas d'un traitement des feuilles ou du sol.

4. Utilisation pour la régulation de la croissance des plantes d'un dérivé de cyclohexenone de la formule I

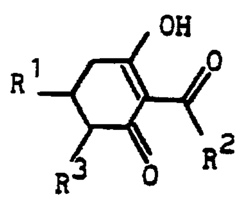 (I)

dans laquelle
$R^1$ représente un hétérocycle de 5 à 7 chaînons avec 1 à 3 hétéroatomes identiques ou différents ou chaînons de noyau du groupe N, O, S, SO ou $SO_2$, qui peut contenir éventuellement jusqu'à 3 substituants du groupe alkyle, alcényle, alcoxy, alcoxyalkyle, alkylthio ayant chacun 1 à 6 atomes de carbone, cyclohexyle, cyclohexyloxy, halogène, nitro dialkylamino, phényle ou phénoxy, phényle et phénoxy pouvant être substitués par méthyle, chlore ou méthoxy,
$R^2$ représente alkyle, alcoxyalkyle ayant chacun 1 à 4 atomes de carbone, cyclopropyle, benzyle, phényléthyle ou acyloxyalkyle ayant jusqu'à 6 atomes de carbone, et
$R^3$ représente hydrogène, alcoxycarbonyle à 2 à 5 atomes de carbone ou cyano
ou des sels de ces composés utilisables en agriculture.

5. Utilisation pour la régulation de la croissance des plantes d'un dérivé de cyclohexenone selon la revendication 4, dans lequel $R^1$ représente 3-isopropyl-isoxazol-5-yle ou 2-diméthylaminothiazol-5-yle.

6. Utilisation pour la régulation de la croissance des plantes d'un dérivé de cyclohexenone selon la revendication 4, dans lequel $R^1$ représente 2-diméthylamino-thiazol-5-yle, $R^2$ propyle et $R^3$ hydrogène.

7. Procédé pour la régulation de la croissance des plantes, caractérisé par le fait qu'on fait agir sur les plantes ou leur biotope au moins un dérivé de cyclohexenone selon la revendication 4.

8. Procédé pour la régulation de la croissance des plantes, caractérisé par le fait qu'on fait agir un agent contenant un dérivé de cyclohexenone selon la revendication 4 dans lequel $R^1$ représente 2-diméthylamino-thiazol-5-yle.

9. Procédé pour la régulation de la croissance des plantes selon les revendications 7 et 8, caractérisé par le fait qu'on utilise un dérivé de cyclohexenone selon la revendication 4, en quantité de 0,001 à 50 g par kg de semences, dans le cas d'un traitement des semences ou une teneur en principe actif de I de 0,01 à 12 kg/ha dans le cas d'un traitement des feuilles ou du sol.